# EUROPÄISCHE PATENTSCHRIFT

(11) **EP 3 333 418 B1**
(45) Veröffentlichungstag und Bekanntmachung des Hinweises auf die Patenterteilung: **14.09.2022**
(21) Anmeldenummer: 16202370.9
(22) Anmeldetag: 06.12.2016
(51) Int. Cl.: F03D 80/50

(54) **VERFAHREN ZUR REPARATUR EINER IN EINER WINDENERGIEANLAGE MONTIERTEN AZIMUTBREMSSCHEIBE SOWIE EINE SOLCHE**
METHOD FOR REPAIRING AN AZIMUTH BRAKE DISC MOUNTED IN A WIND TURBINE AND SAME
PROCÉDÉ DE RÉPARATION D'UN DISQUE DE FREIN AZIMUTAL MONTÉ SUR UNE ÉOLIENNE AINSI QU'UNE TELLE ÉOLIENNE

(43) Veröffentlichungstag der Anmeldung: 13.06.2018
(73) Patentinhaber: Nordex Energy SE & Co. KG, 22419 Hamburg (DE)
(72) Erfinder: Fischer, Enrico, 74794 Alunda (SE); Behnke, Merten, 23974 Blowatz OT Alt Farpen (DE)
(74) Vertreter: Hauck Patentanwaltspartnerschaft mbB

(56) Entgegenhaltungen:
- CN-A- 101 543 945
- CN-A- 103 785 989
- CN-U- 202 431 438
- ES-A1- 2 389 359
- US-A1- 2011 142 626

## Beschreibung

Die vorliegende Erfindung betrifft ein Verfahren zur Reparatur einer in einer Windenergieanlage montierten Azimutbremsscheibe sowie eine solche.

Aus EP 0 592 179 A1 ist ein Verfahren zur Aufarbeitung von Maschinenteilen, wie beispielsweise Kolben und Spindeln bekannt. Das Verfahren sieht vor, dass in einem verschlissenen Bereich eine spanende Bearbeitung erfolgt und ein umlaufendes Reparaturteil eingesetzt wird, das mit Elektronenstrahlschweißung befestigt wird.

Aus dem spanischen Erfindungspatent Nr. 10 721 ist es bekannt, Winkelprofile in ihrem Kantenbereich zu reparieren.

Aus GB 2,198,667 ist ein Verfahren zur Reparatur von Hochgeschwindigkeitsturbinen bekannt. Hierzu wird von dem Maschinenteil beschädigtes Material in Form eine Passstücks entfernt, das Passstück wird gehärtet und an das Maschinenteil geschweißt sowie anschließend bearbeitet.

Aus GB 764,621 und GB 764,622 sind Verfahren zur Reparatur von gebrochenen bzw. angebrochenen Metallgegenständen bekannt, bei denen vorgesehen ist, Platten oder Verriegelungselemente in eine Vertiefung einzusetzen und diese mit einem geeigneten Füllmaterial vor einer Verbindung zu füllen.

US 2011/0142626 A1 beschreibt eine Azimutbremsscheibe, die im montierten Zustand gewartet werden kann. Die Azimutbremsscheibe weist einen kreisförmigen Trägerkörper auf, an dem eine Vielzahl von Segmenten der Azimutbremsscheibe lösbar angebracht ist. Für Wartungsarbeiten können Segmente einzeln ausgetauscht werden.

Aus CN 103 785 989 A ist ein Reparaturverfahren für eine Azimutbremsscheibe einer Windenergieanlage bekannt geworden. Bei diesem Verfahren wird ein spanabhebendes Werkzeug an der Azimutbremse befestigt und die Azimutbremsscheibe bearbeitet. Bei einem Abtrag von mehr als 8 mm wird ein Einsatz in die Bremsscheibe eingeschweißt.

Der Erfindung liegt die Aufgabe zugrunde, ein Verfahren zur Reparatur einer in einer Windenergieanlage eingebauten Azimutbremsscheibe sowie eine solche bereitzustellen, das mit möglichst einfachen Mitteln eine Reparatur der Azimutbremsscheibe erlaubt.

Erfindungsgemäß wird die Aufgabe durch ein Verfahren mit den Merkmalen aus Anspruch 1 gelöst. Vorteilhafte Ausgestaltungen bilden den Gegenstand der Unteransprüche.

Das erfindungsgemäße Verfahren ist speziell ausgebildet, um eine Azimutbremsscheibe in einer Windenergieanlage zu reparieren. Die Windenergieanlage besitzt mindestens einen mit der Azimutbremsscheibe zusammenwirkenden Bremssattel und mindestens einen Azimutantrieb zur Nachführung eines Maschinenhauses entsprechend der Windrichtung. Durch Betätigen der Bremssättel an der Azimutbremsscheibe wird eine Drehbewegung des Maschinenhauses abgebremst. Durch den Azimutantrieb wird das Maschinenhaus um eine Turmlängsachse gedreht. Das erfindungsgemäße Verfahren sieht vor, ein spanend arbeitendes Werkzeug an einer an dem Maschinenhaus angeordneten Halteeinrichtung zu montieren. Mit der Montage des Werkzeugs nimmt diese eine genau definierte Position an dem Maschinenhaus ein. In einem darauffolgenden Schritt erfolgt eine spanende Bearbeitung des zu reparierenden Bereichs. Hierzu wird die Azimutbremsscheibe unter Drehbewegung des Maschinenhauses mit Hilfe des mindestens einen Azimutantriebs relativ zu dem gehaltenen Werkzeug bewegt. Nach Abschluss der spanenden Bearbeitung der Azimutbremsscheibe wird ein Passstück in den bearbeiteten Bereich eingebracht. Das eingebrachte Passstück wird mit der Azimutbremsscheibe mechanisch verbunden und nachfolgend erfolgt eine Oberflächenbearbeitung der Azimutbremsscheibe mit eingesetztem und mechanisch verbundenem Passstück. Das erfindungsgemäße Verfahren besitzt als Besonderheit, dass das spanend arbeitende Werkzeug fest an dem Maschinenhaus angeordnet ist. Hierdurch wird eine definierte Ausgangslage geschaffen, von der ausgehend, die Bearbeitung der Azimutbremsscheibe durchgeführt wird. Eine weitere Besonderheit bei dem Verfahren ist, dass die Azimutantriebe eingesetzt werden, um das spanend arbeitende Werkzeug entlang der Azimutbremsscheibe zu verfahren. Hierdurch wird eine Bearbeitung durchgeführt, die auch der späteren Bewegung der Azimutbremsscheibe im Betrieb der Windenergieanlage entspricht.

In einer bevorzugten Ausgestaltung wird der Bereich an der Azimutbremsscheibe bis zu einer einheitlichen Tiefe abgetragen, die kleiner oder gleich der Dicke des Passstücks ist. Anders als bei Verfahren aus dem Stand der Technik, bei denen nach Bearbeitung des auszubessernden Werkstücks die Maße für das Passstück festgelegt werden, ist bei dem erfindungsgemäßen Verfahren durch das Passstück mindestens die Tiefe der Bearbeitung an der Azimutbremsscheibe vorgegeben. Es erfolgt die Bearbeitung nach den Vorgaben des Passstücks.

In einer bevorzugten Ausgestaltung wird der Bereich in seinem Übergang zur Bremsscheibe in Umfangsrichtung mit einer gebogenen Kontur abgetragen. Der bearbeitete Bereich an der Azimutbremsscheibe besitzt in Umfangsrichtung der Brems scheibe einen Übergang zum nicht bearbeiteten Bereich der Azimutbremsscheibe. Dieser Übergang besitzt bevorzugt einen gebogenen Verlauf, der von einem geraden und in radialer Richtung verlaufenden Übergang abweicht.

In einer weiteren bevorzugten Ausgestaltung sieht das erfindungsgemäße Verfahren vor, dass in den bearbeiteten Bereich der Azimutbremsscheibe Bohrungen eingebracht werden. Die eingebrachten Bohrungen fluchten mit den Bohrungen, die in dem Passstück vorgesehen sind. Bei dem erfindungsgemäßen Verfahren werden die Bohrungen in den bearbeiteten Bereich eingebracht, entsprechend den Bohrungen in dem Passstück. Hierbei kann das Passstück bereits in dem bearbeiteten Bereich eingesetzt sein, sodass die Bohrungen in dem Bereich und in dem Passstück gemeinsam eingebracht werden oder das Passstück besitzt bereits eine Bohrungsanordnung, die dann auf den bearbeiteten Bereich der Azimutbremsscheibe übertragen wird.

In einer weiteren bevorzugten Ausgestaltung ist das Passstück mit der Azimutbremsscheibe verklebt. Alternativ oder zusätzlich kann das Passstück auch mit der Azimutbremsscheibe verschweißt werden.

In einer bevorzugten Ausgestaltung weist die Halteeinrichtung ein Einstellmittel für die Position des spanend arbeitenden Werkzeugs relativ zu der Azimutbremsscheibe auf. Hierdurch kann beispielsweise die Breite des zu bearbeitenden Bereichs in radialer Richtung festgelegt werden. Ebenfalls kann auch die Tiefe, mit der der Bereich bearbeitet wird, festgelegt werden.

Die erfindungsgemäße Aufgabe wird ebenfalls durch eine Azimutbremsscheibe mit einem Passstück gelöst, das in einen spanend abgetragenen Bereich der Azimutbremsscheibe eingesetzt ist oder über Befestigungsmittel mit der Azimutbremsscheibe verbunden ist, wobei die Oberfläche der Azimutbremsscheibe und des Passstücks in einem einheitlichen Arbeitsschritt bearbeitet, beispielsweise geschliffen wird. Die erfindungsgemäße Azimutbremsscheibe besitzt eine glatte Oberfläche, wobei ein Passstück in die Azimutbremsscheibe eingearbeitet ist.

Die bevorzugte Azimutbremsscheibe besitzt ein Passstück, das die Form eines Ringabschnitts mit einer kreisbogenförmigen Innenkante und einer kreisbogenförmigen Außenkante sowie einem gebogenen Übergang an den in radialer Richtung außenliegenden Enden des Passstücks aufweist. Dabei ist der gebogene Übergang als Kontur so ausgebildet, dass die Bogenlänge des Passstücks für die Innenkante größer als für die Außenkante ist. Bei einer radial nach innen verlaufenden geraden Kontur wäre die Bogenlänge der Außenkante größer als die Bogenlänge der Innenkante. Der gebogene Übergang des Passstücks ist bevorzugt eine kreisförmige Innenkante der Azimutbremsscheibe. Das Passstück wird in dieser Ausgestaltung stets vom inneren Rand der Azimutbremsscheibe ausgehend eingesetzt.

Ein bevorzugtes Ausführungsbeispiel wird nachfolgend erläutert. Es zeigen:
- Fig. 1: eine Draufsicht auf eine Azimutbremsscheibe mit einem bereits bearbeiteten Bereich,
- Fig. 2: einen Schnitt entlang der Linie A-A aus Fig. 1,
- Fig. 3: ein Detail B aus der Schnittansicht in Fig. 2,
- Fig. 4: ein Detail C aus der Draufsicht in Fig. 1,
- Fig. 5: eine perspektivische Ansicht einer Azimutbremsscheibe mit Passstück,
- Fig. 6: ein Detail D aus Fig. 5 und
- Fig. 7: eine Schnittansicht durch den Turmkopf.

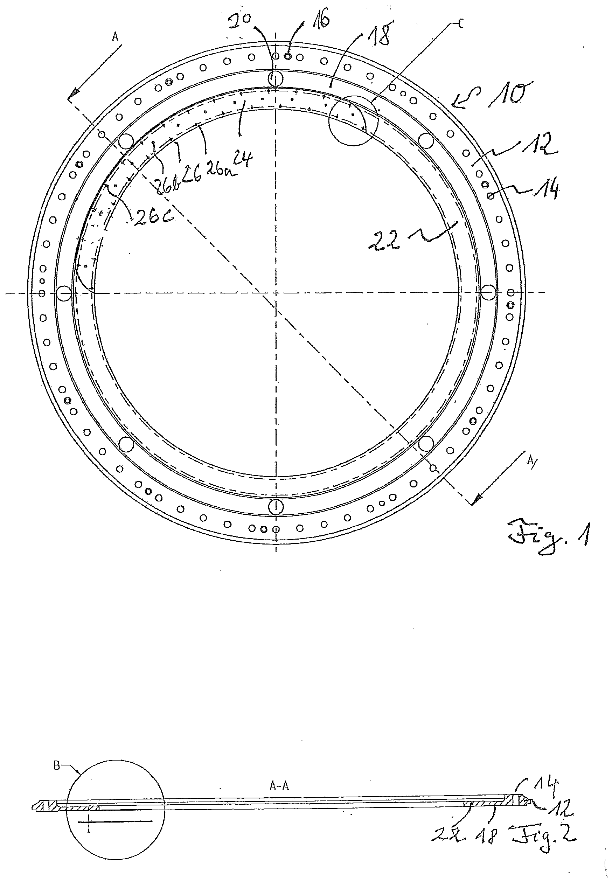

Fig. 1 zeigt eine Azimutbremsscheibe 10 in einer Draufsicht. Die Azimutbremsscheibe 10 besitzt einen äußeren Befestigungsabschnitt 12 mit Befestigungsbohrungen 14. Die Befestigungsbohrungen 14 laufen gleichmäßig beabstandet an dem Befestigungsabschnitt um. Zusätzlich zu den gleichmäßig voneinander beabstandeten Befestigungsbohrungen gibt es zwölf zusätzliche Bohrungen 16, die ebenfalls in gleichmäßigem Abstand zueinander umlaufend an dem Befestigungsabschnitt angeordnet sind. Die Azimutbremsscheibe 10 besitzt ferner einen mittleren Übergangsbereich 18, der acht gleichmäßig über den Umfang verteilte Durchbrechungen 20 besitzt.

Innenliegend ist ein umlaufender Bremsring 22 vorgesehen. Der Bremsring 22 besitzt einen Innenradius und einen Außenradius, mit dem er an den Übergangsbereich 18 anschließt. Der Bremsring 22 bildet den Bereich der Azimutbremsscheibe 10, der mit den Bremssätteln, die die Bremskraft ausüben, zusammenwirkt. In Anlehnung an den englischen Ausdruck "brake caliper" wird auch der Ausdruck "Bremskaliber" für "Bremssattel" verwendet. Der Bremsring 22 besitzt bei dem in Fig. 1 dargestellten Ausführungsbeispiel einen bearbeiteten Bereich 24, der sich ungefähr von 9 Uhr bis 1 Uhr auf dem Bremsring 22 erstreckt. Der bearbeitete Bereich ist mit Bohrungen 26 versehen, die in drei unterschiedlichen Radien in dem bearbeiteten Bereich 24 angeordnet sind. Hierbei liegen die radial innenliegenden Bohrungen 26a und die radial außenliegenden Bohrung 26c jeweils im Umfangsrichtung versetzt zueinander und zu der mittleren Bohrung 26b.

Fig. 2 zeigt einen Schnitt entlang der Linie A-A aus Fig. 1. In Fig. 2 ist der Befestigungsabschnitt 12 mit seiner Befestigungsbohrung 14 zu erkennen. Der Befestigungsabschnitt 12 besitzt in axialer Richtung die größte Höhe. Der Übergangsbereich 18 besitzt in axialer Richtung die geringste Höhe. Der Bremsring 22 besitzt eine größere axiale Höhe als der Übergangsbereich 18.

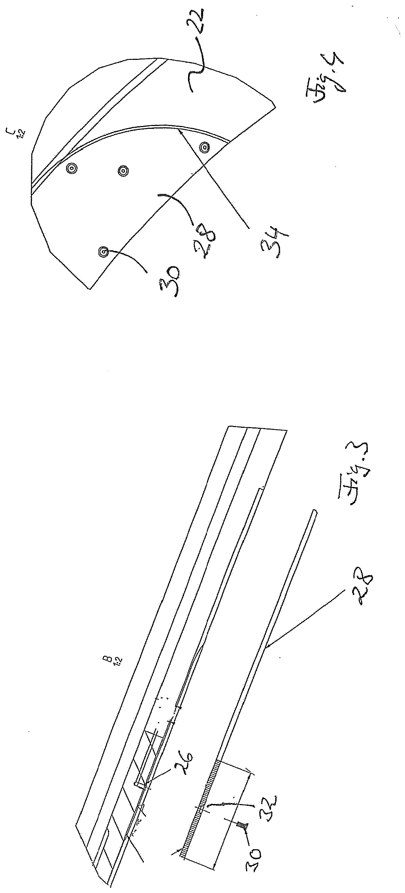

Das Detail B in Fig. 2 und dessen Vergrößerung in Fig. 3 zeigen ein Passstück 28, das über eine Schraube 30 in einer Bohrung des Bremsrings 22 verschraubt. Das Passstück 28 besitzt mit der Bohrung 32 eine passende Öffnung für eine Senkkopfschraube 30.

Fig. 4 zeigt eine Detailansicht C aus Fig. 1. Zu erkennen ist der Bremsring 22 mit dem Passstück 28, das über Schrauben 30 an dem Bremsring 22 befestigt ist. Deutlich zu erkennen in Fig. 4 ist, dass der Übergangsbereich 34 bogenförmig verläuft, wobei der Übergangsbereich 34 ungefähr einem Viertelkreisbogen entspricht. Der bogenförmige Verlauf erleichtert das Einsetzen des Passstücks 28 und auch seine Verbindung mit dem Bremsring 22. Der Viertelkreisbogen ist dabei zum Zentrum des Passstücks 28 hin geneigt.

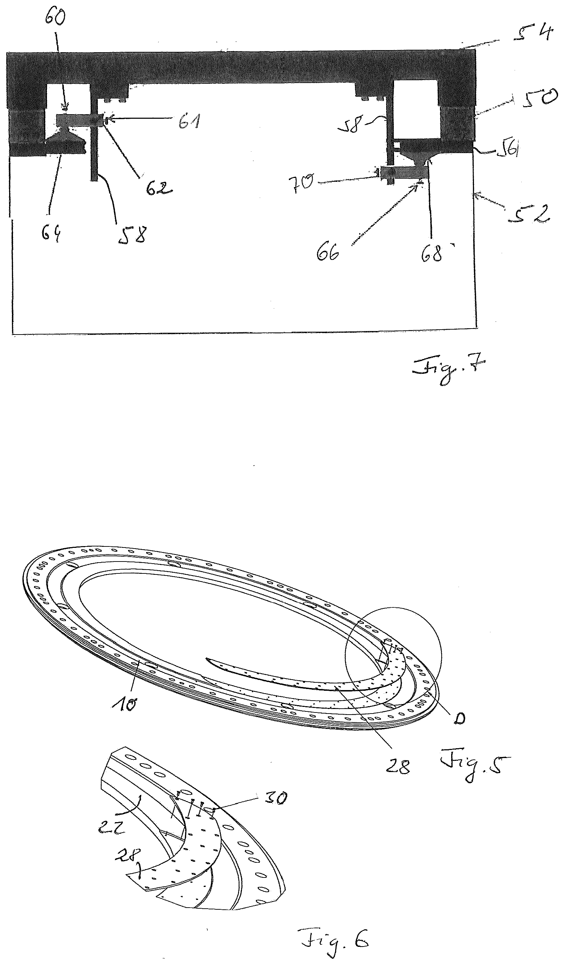

Fig. 5 zeigt in einer perspektivischen Ansicht die Azimutbremsscheibe 10 mit einem angehobenen Passstück 28. Das Detail D aus Fig. 5 ist in Fig. 6 dargestellt und zeigt einige der zur Verbindung des Passstücks 28 vorgesehenen Schrauben 30.

Fig. 7 zeigt eine schematische Ansicht des Aufbaus in einer Azimutdrehverbindung 50. Die Azimutdrehverbindung 50 ist zwischen einem Turmkopf 52 und einem Maschinenträger 54 vorgesehen. Die Azimutbremsscheibe 56 ist in dem dargestellten Ausführungsbeispiel zwischen der Drehverbindung 50 und dem Turmkopf 52 angeordnet, so dass diese fest mit dem Turm verbunden ist.

An dem Maschinenträger 54 sind auf der zum Turmkopf 52 weisenden Seite Halteeinrichtungen 58 vorgesehen. Jeder der Halteeinrichtungen 58 ist maschinenhausfest und dreht sich somit gegenüber der Azimutbremsscheibe 56. Jede Halteeinrichtung 58 kann beispielsweise auch für die Bremssättel ausgestattet sein, die das Bremsmoment auf die Azimutbremsscheibe 56 ausüben. In Fig. 7 sind keine Bremssättel dargestellt. An einer oder beiden Halteeinrichtungen 58 wird ein Fräswerkzeug 60 befestigt. Das Fräswerkzeug 60 verfügt über einen Haltearm 62 und einen Fräskopf 64. Über Einstellmittel 61 kann der Arm 62 des Fräswerkzeugs 60 relativ zu dem zu bearbeitenden Bereich eingestellt werden. Ein auf der dem Turm zugewandten Seite der Azimutbremsscheibe arbeitendes Fräswerkzeug 68 ist auf der rechten Seite der Fig. 7 dargestellt. Auch hier kann das Fräswerkzeug 68 über einen Haltearm 70 und ein Einstellmittel 66 in seiner Lage relativ zum Bremsring eingestellt werden.

### Bezugszeichenliste

- 10: Azimutbremsscheibe
- 12: Befestigungsabschnitt
- 14: Befestigungsbohrungen
- 16: zusätzliche Befestigungsbohrungen
- 18: Übergangsbereich
- 20: Durchbrechungen
- 22: Bremsring
- 24: bearbeiteter Bereich
- 26: Bohrungen
- 26a: radial innenliegende Bohrung
- 26b: mittlere Bohrung
- 26c: radial außenliegende Bohrung
- 28: Passstück
- 30: Schraube
- 32: Bohrung
- 34: Übergangsbereich
- 50: Drehverbindung
- 52: Turmkopf
- 54: Maschinenträger
- 56: Azimutbremsscheibe
- 58: Halteeinrichtung
- 60: Fräswerkzeug
- 61: Einstellmittel
- 62: Haltearm
- 64: Fräskopf
- 66: Einstellmittel
- 68: Fräskopf
- 70: Haltearm

## Patentansprüche

1. Verfahren zur Reparatur einer in einer Windenergieanlage montierten Azimutbremsscheibe, wobei die Windenergieanlage mindestens einen mit der Azimutbremsscheibe zusammenwirkenden Bremssattel und mindestens einen Azimutantrieb zur Nachführung eines Maschinenhauses aufweist; das Verfahren weist folgende Schritte auf:
- Montage mindestens eines spanend arbeitenden Werkzeugs an einer an dem Maschinenhaus angeordneten Halteeinrichtung, die Einstellmittel für die Position des spanend arbeitenden Werkzeugs relativ zu der Azimutbremsscheibe vorsieht,
- spanende Bearbeitung eines zu bearbeitenden Bereichs der Azimutbremsscheibe unter Drehbewegung des Maschinenhauses mit Hilfe des mindestens einen Azimutantriebs, wobei der zu bearbeitende Bereich in seinem Übergang zur Azimutbremsscheibe mit einer gebogenen Kontur abgetragen wird,
- Einbringen eines Passstücks in den bearbeiteten Bereich,
- Verbinden des eingebrachten Passstücks mit der Azimutbremsscheibe, wobei in dem zu bearbeitenden Bereich der Azimutbremsscheibe Bohrungen eingebracht sind, die mit Bohrungen in dem Passstück fluchten, und das Passstück mit der Azimutbremsscheibe durch mehrere Schrauben verbunden wird, und
- Bearbeiten der Oberfläche der Azimutbremsscheibe.

2. Verfahren nach Anspruch 1, **dadurch gekennzeichnet, dass** der zu bearbeitende Bereich bis zu einer einheitlichen Tiefe abgetragen wird, die kleiner oder gleich der Dicke des Passstücks ist.

3. Verfahren nach einem der Ansprüche 1 bis 2, **dadurch gekennzeichnet, dass** das Passstück mit der Azimutbremsscheibe verklebt wird.

4. Azimutbremsscheibe einer Windenergieanlage mit einem Passstück, das in einem spanend bearbeiteten Bereich der Azimutbremsscheibe eingesetzt und über Befestigungsmittel mit der Azimutbremsscheibe verbunden ist, wobei die Oberfläche der Azimutbremsscheibe und des Passstücks in einem einheitlichen Arbeitsschritt bearbeitet ist, **dadurch gekennzeichnet, dass** das Passstück die Form eines Ringabschnitts mit einer kreisbogenförmigen Innenkante und einer kreisbogenförmigen Außenkante sowie gebogene Übergänge derart aufweist, dass die Bogenlänge des Passstücks für die Innenkante größer als für die Außenkante ist.

5. Azimutbremsscheibe nach Anspruch 4, **dadurch gekennzeichnet, dass** die Innenkante des Passstücks mit einer kreisförmigen Innenkante der Azimutbremsscheibe zusammenfällt.

## Claims

1. A method for repairing a yaw brake disk installed in a wind turbine, wherein the wind turbine comprises at least one brake caliper that cooperates with the yaw brake disk and at least one yaw drive for aligning a nacelle; the method comprises the following steps:
- installing at least one cutting tool on a holding apparatus that is arranged at the nacelle and that provides adjustment means for the position of the cutting tool relative to the yaw brake disk,
- machining a region of the yaw brake disk to be machined by cutting while the nacelle is rotated by means of the at least one yaw drive, wherein material is removed with a curved contour from the region to be machined at the transition thereof to the yaw brake disk,
- inserting a fitting piece into the machined region,
- connecting the inserted fitting piece to the yaw brake disk, wherein holes are made in the region of the yaw brake disk to be machined so as to be aligned with holes in the fitting piece, and the fitting piece is connected to the yaw brake disk by means of multiple screws, and
- machining the surface of the yaw brake disk.

2. The method according to claim 1, **characterized in that** material is removed from the region to be machined to a consistent depth that is less than or equal to the thickness of the fitting piece.

3. The method according to any one of claims 1 to 2, **characterized in that** the fitting piece is glued to the yaw brake disk.

4. A yaw brake disk of a wind turbine having a fitting piece that is inserted in a region of the yaw brake disk machined by cutting and that is connected via fastening means to the yaw brake disk, wherein the surface of the yaw brake disk and of the fitting piece is machined in a common work step, **characterized in that** the fitting piece has the shape of ring portion having an inner edge in the shape of a circular arc and an outer edge in the shape of a circular arc as well as curved transitions, such that the arc length of the fitting piece is greater for the inner edge than for the outer edge.

5. The yaw brake disk according to claim 4, **characterized in that** the inner edge of the fitting piece coincides with a circular inner edge of the yaw brake disk.

## Revendications

1. Procédé de réparation d'un disque de frein azimutal monté dans une éolienne, dans lequel l'éolienne présente au moins un étrier de frein coopérant avec le disque de frein azimutal et au moins un entraînement azimutal destiné à la poursuite d'une nacelle ; le procédé présentant les étapes suivantes :
- montage d'au moins un outil de traitement par enlèvement de copeaux sur un dispositif de maintien disposé sur la nacelle, ledit dispositif de maintien fournissant des moyens de réglage de la position de l'outil de traitement par enlèvement de copeaux par rapport au disque de frein azimutal,
- traitement par enlèvement de copeaux d'une région à traiter du disque de frein azimutal par un mouvement de rotation de la nacelle à l'aide dudit au moins un entraînement azimutal, la région à traiter étant érodée avec un contour courbé dans sa transition vers le disque de frein azimutal,
- insertion d'une pièce d'ajustement dans la région traitée,
- assemblage de la pièce d'ajustement insérée avec le disque de frein azimutal, des alésages étant formés dans la région à traiter du disque de frein azimutal, lesquels sont alignés avec des alésages dans la pièce d'ajustement, et la pièce d'ajustement étant reliée au disque de frein azimutal par plusieurs vis, et
- traitement de la surface du disque de frein azimutal.

2. Procédé selon la revendication 1, **caractérisé en ce que** la région à traiter est érodée jusqu'à une profondeur uniforme, laquelle est inférieure ou égale à l'épaisseur de la pièce d'ajustement.

3. Procédé selon l'une des revendications 1 à 2, **caractérisé en ce que** la pièce d'ajustement est fixée par collage au disque de frein azimutal.

4. Disque de frein azimutal d'une éolienne comprenant une pièce d'ajustement, laquelle est insérée dans une région traitée par enlèvement de copeaux du disque de frein azimutal et reliée au disque de frein azimutal par des moyens de fixation, la surface du disque de frein azimutal et de la pièce d'ajustement étant traitée au cours d'une unique étape de travail, **caractérisé en ce que** la pièce d'ajustement présente la forme d'une section annulaire avec une arête intérieure en arc de cercle et une arête extérieure en arc de cercle ainsi que des transitions courbées, de sorte que la longueur d'arc de la pièce d'ajustement est plus grande pour l'arête intérieure que pour l'arête extérieure.

5. Disque de frein azimutal selon la revendication 4, **caractérisé en ce que** l'arête intérieure de la pièce d'ajustement coïncide avec une arête intérieure circulaire du disque de frein azimutal.
